Europäisches Patentamt

European Patent Office

Office européen des brevets

(11) Publication number : **0 481 943 A1**

# (12) EUROPEAN PATENT APPLICATION

(21) Application number : **91850253.5**

(22) Date of filing : **15.10.91**

(51) Int. Cl.$^5$ : **B65D 51/18, B65D 77/20**

(30) Priority : **19.10.90 SE 9003353**

(43) Date of publication of application :
**22.04.92 Bulletin 92/17**

(84) Designated Contracting States :
**DE DK FR GB NL**

(71) Applicant : **AB CERBO**
**Box 905**
**S-461 29 Trollhättan (SE)**

(72) Inventor : **Axelsson, Katarina**
**Korteredsvägen 11**
**S-461 73 Trollhättan (SE)**
Inventor : **Ingemarsson, Hakan**
**Trollgatan 9A**
**S-461 34 Trollhättan (SE)**

(74) Representative : **Westerlund, Christer et al**
**L.A. Groth & Co Patentbyra AB, P.O. Box 6107**
**S-102 32 Stockholm (SE)**

(54) **A package and a method for sealing the package.**

(57)    A package comprising a tray (1) and a removable lid (3), which package is especially intended for keeping and heating of ready-cooked food, the lid being made of cardboard and/or plastics material and the tray being made of plastics and provided with a frame (2) surrounding its opening. The features of the package are that the lid (3) detachably rests on the frame (2) of the tray and has a lesser extension than same and that a plastic film (4) covers the lid and at least part of the frame and is heat-sealed only to the portion (2b) of the frame located outside the lid.
    The invention also relates to a method for sealing the package.

EP 0 481 943 A1

## Technical field

The present invention relates to a package and a method for sealing the package. The package is especially intended for keeping and heating ready-cooked food and comprises a tray and a lid, the lid being made of cardboard and/or plastics material, and the tray being made of plastics and provided with a frame surrounding the tray opening.

## Prior art

It is known to keep and to heat ready-cooked food in packages consisting of a tray provided with a lid. It is essential that the food should not be affected by the packaging material and that the lid should be easily removable from the tray.

A package fulfilling these requirements comprises an aluminium tray with a cardboard and/or aluminium lid which is attached to the tray by folding the edges surrounding the opening of the tray inwardly over the lid. The lid may be removed from the tray after said edges have been folded away from the lid. Disadvantages of this package are that sealing is carried out manually, that the food cannot be heated inside the package in a microwave oven and that the sealing will not be liquidproof.

A package in which the food can be heated in a microwave oven and wrhich can be sealed mechanically comprises a tray of plastics material, such as CPET, and a lid made of plastic-coated cardboard, which lid can be welded (heat-sealed) to the edges of the tray opening. A disadvantage of this kind of package is that the lid is difficult to remove and often breaks on removal.

Further, it is known to weld a plastic film to a CPET tray. With this kind of package it it difficult to tear and to remove the film without touching the food. Moreover, it is not possible to provide the film with information in the form of, for example, advertising or a text stating the contents of the package. For this reason, and because of the fragility of packages of this kind, they are often supplied in cardboard cases provided with such information.

From the Swedish patent application No. 89 01848-5 there is known a package consisting of a plastics tray, a plactic film covering the tray opening, and a lid made of cardboard and plastics, also covering the tray opening, said details being heat-sealed to each other by the plastic film being welded to the edge surrounding the tray opening and the lid being welded to the plastic film. While this package is suitable for heating of, in particular, ready-cooked food in an oven and its lid is removable with a so called peel-off effect, i.e. the plastic film may be removed from the tray without the lid getting torn or other-wise damaged, it has got disadvantages, the main one probably being that after the lid has been removed from the tray together with the plastic film it cannot be used for covering the tray opening again because of the lid and the plastic film having been deformed on removal from the tray.

## Description of the invention

It is an object of the present invention to improve packages of the above-mentioned kind and to seal these in a simple, nonexpensive and efficient way.

This object is accomplished by providing the package of the invention with the features stated in the characterizing portions of the claims.

## Description of the figures

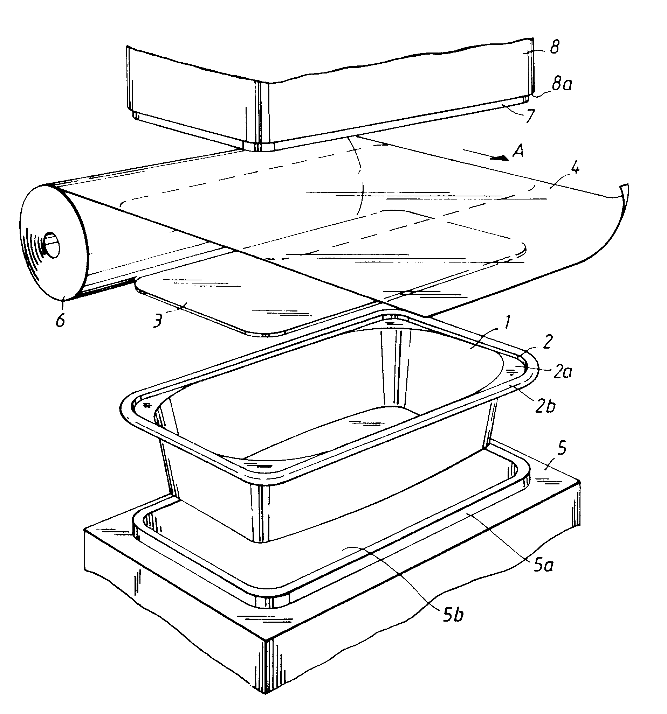

The one figure of the drawing is a schematic, exploded perspective view showing a package according to the invention being sealed.

## Preferred embodiment

The package according to the invention comprises a tray 1 of thermoformed CPET (polyethylene terephtalate) with an opening surrounded by a frame 2, a lid 3 of cardboard and/or plastics material, suitably a material marketed under the name of Invercote (registered trademark) G + AP (ethylene acrylic acid) or cardboard coated with PP or PET, and a film or sheeting 4 of polyester, suitably a polyester film sheeting marketed under the name of Mylar (registered trademark) OL.

The frame 2 of the tray 1 consists of a first frame portion 2a next to the opening, the width of which is greatest closest to the corners of the tray, and a second frame portion 2b, a couple of millimetres wide, located outside the first frame portion at a distance from the bottom of the tray greater than that of the first frame portion from the bottom of the tray. The distance between the frame portions 2a and 2b is suitably greater than the thickness of the lid.

The materials of the tray 1 and the film 4 are heat-sealable to each other. Further, the lid 3 may be heat-sealable to the tray 1 and/or film 4 but usually is not.

The figure shows the package being sealed.

After the tray 1 has been filled with ready-cooked food, it is placed on a container-like countersupport 5 such that the underside of the frame portion 2b will bear on an annular rib 5a, which suitably consists of hard rubber, while the lower part and the walls of the tray will be inserted in the interior space 5b of the countersupport. The tray may be placed on the countersupport manually or by means of a suitable feeding mechanism. A roll 6, on which the film 4 is wound in the form of a band, is located over and at the side of the countersupport 5. The width of the roll 6 and therefore of the film 4 is equal to or somewhat greater than the length of the tray 1 parallell to the central axis of the roll. For each tray 1 placed on the countersupport 5, the film 4 is intended to be advanced from the roll 6 immediately over the tray in the direction of the arrow A over a distance equal to or somewhat greater than the length of the tray transversely to the central axis of the roll 6, by a suitable device (not shown in the figure).

Before the film 4 is advanced in the way described in the preceding paragraph the lid 3 is placed on top of the inner frame portion 2a of the tray, manually or by a feeding device (not shown), such that the edges of the lid will be located at a short distance from the outer frame portion 2b.

At a distance over the countersupport 5 somewhat greater than the height of the tray 1 there is disposed a welding head 7. The head 7 is provided with a downwardly projecting, annular surface corresponding to the upper surface of the outer frame portion 2b. The head 7 is movable towards and from the tray 1 with the lid 3 and film 4 thereon, the temperature of the head being such that heat sealing or welding of the film is provided only at the outer frame portion 2b of the tray when the head is briefly pressed against these with the rib 5a as a countersupport.

After or in connection with the above described heat sealing, a sleeve 8 with a heated lipshaped lower edge 8a, which sleeve surrounds the welding head 7 by which it is guided, is carried downwardly towards the tray 1, when the film 4 will melt immediately outside the outer frame portion 2b, so that the parts of the film surrounding said frame portion will be separated from the now finished package, which will then be removed from the countersupport 5 manually or by means of some suitable feeding out device.

When the food in the package is to be heated, the package is placed in a conventional oven or a microwave oven. Before the package is placed in the oven, the film 4 may be removed, if desired, which takes place with the so called peel-off effect between the film and the outer frame portion 2b of the tray. After the film has been removed, the lid 3 will be lying loosely on top of the tray in contact with the inner frame portion 2a, covering the tray opening and being removable for inspection, supplementation or spicing of the food, whereafter it may be placed on the tray again, and the tray with the food and the lid placed loosely thereon may then be put back in the oven for heating, with the lid acting as a protective cover.

While only one embodiment of the present invention has been described above and shown on the drawing, it will be understood that the invention is not limited to said embodiment but only by what is stated in the claims.

**Claims**

**1** A package comprising a tray (1) and a removable lid (3), which package is especially intended for keeping and heating of ready-cooked food, the lid being made of cardboard and/or plastics material and the tray being made of plastics and provided with a frame (2) surrounding its opening, characterized in that the lid (3) detachably rests on the frame (2) of the tray and has a lesser extension than same and that a plastic film (4) of polyester material covers the lid and at. least part of the frame and is heat-sealed only to the portion (2b) of the frame located outside the lid and is removable from said portion by means of a peel-off effect.

**2** A package as set forth in claim 1, characterized in that the frame (2) comprises a first frame portion (2a) next to the opening of the tray (1) and a second frame portion (2b) located outside the first frame portion at a distance from the bottom of the tray which is greater than the distance of the first frame portion from the tray bottom, that the lid (3) is planar and rests on the first frame portion, and that the plastic film (4) is supported by the lid and is attached to the second frame portion.

**3** A method for sealing a package, specially intended for keeping of ready-cook.ed food and heating of same in an oven, the package comprising a tray (1) and a lid (3), which tray is provided with an opening and a trame (2) surrounding the opening and is made of plastics material, the area of the lid being larger than that of the opening and the lid being made of cardboard and/or plastics material, comprising the following steps:

a) the tray (1) with contents is placed on a support (5),
b) the lid (3) is brought to bear on the frame (2) of the tray, such that the edges of the lid will be located within the outer edges of the frame,
c) a plastic film (3), the area of which is larger than that of the lid, is placed over the tray with closed lid, and
d) the plastic film is welded to the frame of the tray outside the lid,

characterized in that the area of the plastic film (4), when placed over the tray (1), is essentially larger than that of the lid (3) and is given substantially the same length-width dimension as the tray in connection with its being welded to the frame (2) of the tray.

**4** A method as set forth in claim 3, characterized in that the plastic film (4) in the form of a band is advanced to a position over the tray (1) in which the plastic film is given substantially the same length-width dimension as the tray through separation by means of heat.

European Patent
Office

# EUROPEAN SEARCH REPORT

Application Number

EP    91 85 0253

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1 145 764 (ILLINOIS TOOL WORKS) | 1,2 | B65D51/18 |
| Y | * page 2, line 26 - line 49 * | 3,4 | B65D77/20 |
| | * page 2, line 71 - line 92 * | | |
| | * page 2, line 114 - page 3, line 3 * | | |
| | * page 3, line 62 - page 4, line 8 * | | |
| | * figures 1-6 * | | |
| | --- | | |
| D,Y, P | EP-A-0 399 981 (CERBO) | 3,4 | |
| | * the whole document * | | |
| | & SE-A-8 901 848 | | |
| | --- | | |
| X | FR-A-1 464 910 (OLLIER) | 1,2 | |
| | * page 2, left column, line 18 - right column, line 35; figures 1-3 * | | |
| | --- | | |
| X | FR-A-1 499 662 (HASSIA) | 1 | |
| | * the whole document * | | |
| | ----- | | |

TECHNICAL FIELDS
SEARCHED (Int. Cl.5 )

B65D

The present search report has been drawn up for all claims

| Place of search | Date of completion of the search | Examiner |
|---|---|---|
| THE HAGUE | 17 JANUARY 1992 | MARTENS L. G. R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
....................................................................................
& : member of the same patent family, corresponding
document

EPO FORM 1503 03.82 (P0401)